# DEMANDE DE BREVET EUROPEEN

(11) **EP 2 632 194 A1**
(43) Date de publication de la demande: **28.08.2013**
(21) Numéro de dépôt: 12305197.1
(22) Date de dépôt: 21.02.2012
(51) Int. Cl.: H04W 8/20

(54) **Procédé de personnalisation d'un élément de sécurité coopérant avec un équipement**

(71) Demandeur: Gemalto SA, 92190 Meudon (FR)
(72) Inventeur: Tuilier, Edmond, 13705 La Ciotat (FR); Quiriconi, Jean-Remi, 13705 La Ciotat (FR)

(57) **Abrégé**

L'invention concerne un procédé de personnalisation d'un élément de sécurité (10) coopérant avec un équipement (11).

Cette personnalisation consiste à télécharger des données liées à un abonnement à un réseau d'un opérateur de radiotéléphonie mobile dans l'élément de sécurité (10).

Selon l'invention, le procédé consiste à :
i- connecter l'équipement (11) à un lecteur de carte (12) ;
ii- lire dans la carte (13) des données d'opérateur correspondant à au moins un abonnement à un réseau d'un opérateur de radiotéléphonie mobile ;
iii- transmettre les données d'opérateur du lecteur (12) vers un réseau d'opérateur (14) ;
iv- transmettre du réseau d'opérateur (14) vers un gestionnaire d'abonnements (16) une requête de transfert des données liées à l'abonnement au réseau d'opérateur de radiotéléphonie mobile ;
v- transmettre du gestionnaire (16) à l'élément de sécurité (10) les données liées à l'abonnement au réseau d'opérateur de radiotéléphonie mobile.

## Description

Le domaine de l'invention est celui des télécommunications et concerne notamment un procédé permettant de personnaliser un élément de sécurité coopérant avec un équipement tel qu'une machine. On entend par personnalisation d'un élément de sécurité le téléchargement de données confidentielles dans l'élément de sécurité permettant de le diversifier des autres éléments de sécurité et de ce fait d'assurer l'unicité des secrets et identifiants chargés dans chaque élément de sécurité.

L'élément de sécurité est typiquement une carte de type SIM (en GSM) ou USIM (en UMTS), génériquement appelée UICC, destinée à coopérer avec un équipement. L'élément de sécurité n'est pas nécessairement extractible de l'équipement, tel qu'une carte SIM classique, et peut être solidaire de cet équipement (ou de la partie modem faisant partie de cet équipement). Cet élément de sécurité peut également se présenter sous la forme d'un circuit intégré soudé dans un équipement (ou coopérant avec un équipement), dans le cas d'applications M2M (Machine to Machine), l'élément de sécurité étant alors appelé e-UICC et remplissant les mêmes fonctions qu'une carte UICC classique. On entend ici par « fonctions » l'authentification de l'abonné à un réseau de télécommunications, par exemple cellulaire, lui permettant d'établir de manière sécurisée des communications avec des éléments connectés au réseau de l'opérateur. Un tel élément de sécurité renferme notamment un IMSI (International Mobile Subscriber Identity) et une clé Ki lui permettant de s'authentifier sur le réseau de l'opérateur. L'IMSI et la clé Ki sont, dans la suite de cette description, des données liées à un abonnement à un réseau d'un opérateur de radiotéléphonie mobile et font partie des éléments de sécurité de l'abonnement.

L'équipement peut être un terminal de télécommunications tel qu'un téléphone portable, une tablette numérique ou un smartphone. Il peut également s'agir d'une machine plus volumineuse, tel qu'un véhicule automobile, un compteur (gaz ou électricité par exemple), un distributeur de boissons qui sont dans ce cas équipés d'un modem de communication (GSM ou UMTS).

Habituellement, lorsqu'une personne souhaite souscrire un abonnement auprès d'un opérateur, celle-ci se rend dans un centre de vente d'opérateur qui, après lui avoir demandé des documents relatifs à son compte bancaire et son lieu de résidence, lui donne une carte UICC. La carte UICC renferme déjà les identifiants lui permettant de se connecter presque immédiatement au réseau de l'opérateur (le HLR de l'opérateur est préprovisionné avec ces identifiants).

L'inconvénient de cette solution est qu'elle nécessite le déplacement de l'utilisateur jusqu'à un point de vente d'abonnements de l'opérateur de radiotéléphonie mobile.

De plus, cette solution n'est pas applicable dans le cas où l'élément de sécurité est embarqué de manière fixe dans un équipement, car l'élément de sécurité n'est pas insérable dans l'équipement puisqu'il en est solidaire.

A cet effet, la présente invention propose un procédé permettant de personnaliser aisément un élément de sécurité par des données liées à un abonnement à un opérateur de radiotéléphonie mobile.

Selon l'invention, ce procédé consiste à :
i- connecter l'équipement à un lecteur de carte ;
ii- lire dans la carte des données d'opérateur correspondant à au moins un abonnement à un réseau d'un opérateur de radiotéléphonie mobile ;
iii- transmettre ces données d'opérateur du lecteur vers un réseau d'opérateur ;
iv- transmettre du réseau d'opérateur vers un gestionnaire d'abonnements une requête de transfert des données liées à l'abonnement au réseau d'opérateur de radiotéléphonie mobile ;
v- transmettre du gestionnaire à l'élément de sécurité les données liées à l'abonnement au réseau d'opérateur de radiotéléphonie mobile.

Avantageusement, l'étape -v- consiste à transmettre les données liées à l'abonnement au réseau d'opérateur de radiotéléphonie mobile par l'intermédiaire du lecteur de carte.

Alternativement, l'étape -v- consiste à transmettre les données liées à l'abonnement au réseau d'opérateur de radiotéléphonie mobile par l'intermédiaire du réseau Internet auquel est relié le lecteur de carte par l'intermédiaire d'un ordinateur.

L'étape -ii- est préférentiellement précédée d'une étape de vérification d'un code de sécurité.

Dans un mode de mise en oeuvre avantageux du procédé selon l'invention, l'étape -i- est mise en oeuvre par un installateur et le procédé consiste à proposer à l'installateur plusieurs abonnements différents, l'installateur choisissant par l'intermédiaire de l'interface homme-machine du lecteur de carte un des abonnements proposés.

Le procédé selon l'invention peut également être mis en oeuvre par un revendeur de cartes ou un utilisateur final de la machine et le code de sécurité correspond alors à un code de transfert d'un opérateur de radiotéléphonie mobile.

L'élément de sécurité est avantageusement un e-UICC.

D'autres caractéristiques et avantages de l'invention apparaîtront à la lecture de la description suivante de deux modes de mise en oeuvre de l'invention, donnés à titre illustratif et non limitatif, et des figures annexées représentant deux systèmes mettant en oeuvre le procédé selon la présente invention, dans lesquelles :
- la figure 1 représente un système de personnalisation selon l'invention où la personnalisation d'un élément de sécurité est réalisée par un intégrateur ;
- la figure 2 représente un système de personnalisation selon l'invention où la personnalisation d'un élément de sécurité est réalisée par un utilisateur final ou un vendeur d'équipements.

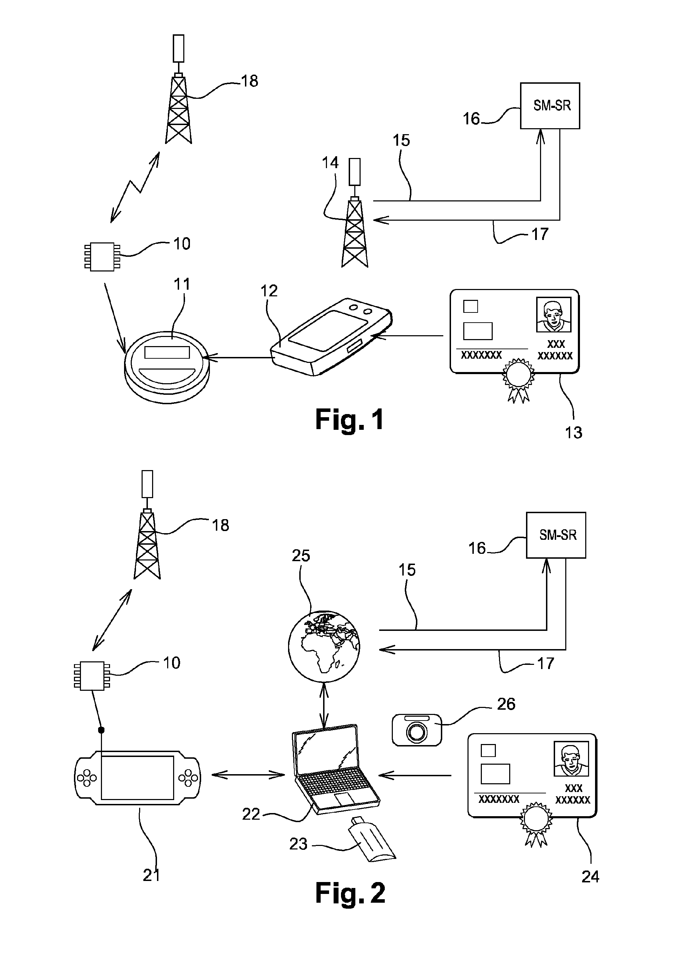

La figure 1 représente un système de personnalisation selon l'invention où la personnalisation d'un élément de sécurité est réalisée par un intégrateur.

Le système de personnalisation de la figure 1 est destiné à personnaliser un élément de sécurité 10, ici constitué par un e-UICC coopérant avec une machine ou un équipement 11. L'équipement 11 est ici constitué par un compteur d'électricité ou de gaz intégrant l'e-UICC. La personnalisation du compteur 11 est ici réalisée par un intégrateur ou installateur disposant d'une carte personnelle 13. Typiquement, cet intégrateur vient installer physiquement le compteur 11 au domicile d'un particulier ou dans une entreprise et l'e-UICC ne comporte pas de données lui permettant de se connecter à un réseau d'un opérateur de radiotéléphonie mobile.

La personnalisation de l'élément de sécurité 10 consiste dans un premier temps à raccorder le compteur 11 à un lecteur de carte 12 ou à un équipement contenant un lecteur de carte 12 dans lequel l'intégrateur peut insérer sa carte personnelle 13. La carte 13 est une carte de type PKI permettant d'authentifier son porteur grâce à un certificat unique, fourni par sa société ou par un opérateur. La carte 13 de l'intégrateur peut comprendre une pluralité de jeux de données d'opérateur offrant l'autorisation de contacter des gestionnaires d'abonnements (SM-SR comme il sera décrit par la suite) de l'opérateur. Cette autorisation donnera la possibilité de télécharger les jeux IMSI/Ki correspondant à des abonnements de plusieurs opérateurs de radiotéléphonie mobile. Cette carte 13 peut également contenir directement les jeux IMSI/Ki correspondant à des abonnements de plusieurs opérateurs.

Après avoir éventuellement vérifié un code de sécurité (par exemple un code à quatre chiffres) entré par l'intégrateur sur le clavier du lecteur 12, soit le lecteur 12 lit dans la carte 13 des données d'opérateur correspondant à au moins un abonnement à un réseau d'un opérateur de radiotéléphonie mobile, soit il interroge la carte 13 pour obtenir l'autorisation de contacter le gestionnaire d'abonnements SM-SR de l'opérateur sélectionné.

Comme indiqué précédemment, plusieurs opérateurs peuvent être provisionnés dans la carte 13, chaque opérateur provisionné pouvant contenir un lien de contact SM-SR ou l'abonnement lui même. L'intégrateur peut alors choisir l'opérateur avec le réseau duquel l'e-UICC pourra entrer en communication. Dans un autre mode de mise en oeuvre, l'intégrateur dispose de plusieurs cartes, chacune renfermant des données d'un opérateur unique. À titre d'exemple, en France, l'intégrateur disposera ainsi d'une carte pour l'opérateur Orange, une autre pour l'opérateur Bouygues, une autre pour l'opérateur Free et une dernière pour l'opérateur SFR. Un autre exemple, en France un intégrateur disposerait d'une unique carte comportant les 4 IMSI/Ki de Bouygues, Orange, SFR et Free.

Le lecteur 12 comporte un modem capable de transmettre les données d'opérateur lues dans la carte 13 à un réseau d'opérateur 14. Ce lecteur 12 comporte typiquement une interface M2M, c'est-à-dire un e-UICC et un modem associé. Le réseau d'opérateur 14 peut être quelconque.

Lors d'une étape de 15, le réseau d'opérateur 14 transmet vers un gestionnaire d'abonnements 16 (noté SM-SR pour Subscription Management - Subscription Routing) une requête de transfert des données liées à l'abonnement choisi.

Le gestionnaire d'abonnements 16 transmet alors, lors d'une étape 17, les données liées à l'abonnement choisi, à l'opérateur 14. Comme précédemment indiqué, ces données correspondent à un profil opérateur complet, incluant notamment le couple IMSI/Ki à charger dans l'élément de sécurité 10 afin qu'il puisse communiquer avec le réseau de l'opérateur choisi.

La transmission des données liées à l'abonnement choisi s'effectue par l'intermédiaire du lecteur 12 qui reçoit ces données de l'opérateur 14. Les données reçues par le lecteur 12 sont alors écrites dans l'élément de sécurité 10. Ce dernier peut alors communiquer avec le réseau d'opérateur 18 choisi.

Dans le cas où les profils opérateurs sont préchargés dans la carte 13, le processus détaillé ci-dessus reste valide, opération effectuée en amont par l'intégrateur avant de réaliser sa tournée sur site pour installer les équipements.

Dans un second mode de mise en oeuvre de la présente invention, représenté à la figure 2, la personnalisation d'un élément de sécurité est réalisée par un utilisateur final ou un vendeur d'équipements.

Ce mode de mise en oeuvre est destiné à un acheteur d'un équipement, telle qu'une console de jeux 21, pourvu d'un e-UICC 10. Lors de son achat, comme précédemment en référence à la figure 1, l'e-UICC 10 ne comporte pas de données permettant de s'authentifier auprès d'un réseau d'opérateur 18.

La personnalisation de l'élément de sécurité 10 s'opère comme suit, lorsqu'elle est mise en oeuvre par l'utilisateur final (typiquement l'acheteur de la console 21) : l'utilisateur final achète, avec la console 21 ou séparément, une carte 24 comprenant des données d'opérateur correspondant à un lien d'abonnement unique à un réseau d'un opérateur de radiotéléphonie mobile. Il a donc préférentiellement le choix de l'opérateur qui gèrera sa console de jeux 21. Une fois à son domicile, l'utilisateur insère sa carte 24 dans un lecteur 23 raccordé à un ordinateur 22 ou intégré à ce dernier. L'utilisateur, équipé d'un CD 26 d'installation d'un logiciel ad-hoc, se connecte alors par l'intermédiaire du réseau Internet 25 au gestionnaire d'abonnement 16 (par l'intermédiaire d'une adresse URL) et lui transmet, lors d'une étape 15, les données liées à l'abonnement figurant dans sa carte 24. Un code de sécurité, préalablement fourni à l'utilisateur final, peut lui être demandé pour que ce transfert s'effectue. Le gestionnaire d'abonnement 16 lui transmet en retour, sous forme sécurisée, les données liées à l'abonnement choisi (profil complet contenant le couple IMSI/Ki). Ces données transitent par l'ordinateur et la console 21 pour être écrites dans l'e-UICC 10. Cet e-UICC 10 est alors apte à se connecter au réseau 18 de l'opérateur dont les données figurent dans la carte 24.

On établit ainsi par une carte 24 une relation physique entre l'utilisateur et son opérateur. La carte 24 matérialise de ce fait la relation que l'utilisateur a avec son opérateur, ce qui a des avantages au niveau marketing : l'utilisateur détient, au moment de son achat, une carte de l'opérateur qu'il aura choisi. L'utilisateur a donc l'impression de se retrouver dans la même situation que lorsqu'il souscrit un abonnement auprès d'un opérateur pour entrer en possession d'une carte Sim qu'il insère dans son équipement, alors que l'e-UICC qu'il personnalise dans le cadre de la présente invention n'est pas extractible de l'équipement 21 qui le renferme.

Lorsque l'invention est mise en oeuvre par un vendeur d'équipements, tels que des consoles 21 par exemple, le procédé selon la présente invention se déroule comme décrit précédemment en référence à la figure 2, avec les différences suivantes : la carte 24 du revendeur comprend plusieurs liens d'abonnements à un opérateur unique ou alors plusieurs liens d'abonnements à des opérateurs différents. Une fois sa carte 24 insérée dans le lecteur 23, il entre un code confidentiel qui lui a été fourni par l'opérateur choisi par l'utilisateur final. A l'aide de ce code, les données d'opérateur correspondant à un abonnement sont transférées via Internet 25 au SM-SR 16 qui lui renvoie le profil complet (intégrant le couple IMSI/Ki) permettant de personnaliser l'e-UICC 10. Ce profil est alors chargé dans l'e-UICC 10 de l'équipement 21 de l'utilisateur.

Dans les deux situations évoquées en référence à la figure 2, le code de sécurité entré par l'utilisateur final ou le revendeur correspond en pratique à un code de transfert d'un profil opérateur de radiotéléphonie mobile. Ce code de transfert est à usage unique pour chaque abonnement chargé dans l'élément de sécurité 10, afin d'éviter qu'un abonnement ne soit installé sur plusieurs équipements. L'opérateur est informé par le SM-SR 16 de l'activation d'un abonnement et celui-ci peut alors provisionner les identifiants IMSI/Ki dans son HLR.

## Revendications

1. Procédé de personnalisation d'un élément de sécurité (10) coopérant avec un équipement (11, 21), ladite personnalisation consistant à télécharger des données liées à un abonnement à un réseau d'un opérateur de radiotéléphonie mobile dans ledit élément de sécurité (10), **caractérisé en ce qu'**il consiste à :
i- connecter ledit équipement (11, 21) à un lecteur de carte (12, 23) ;
ii- lire dans ladite carte (13, 24) des données d'opérateur correspondant à au moins un abonnement à un réseau d'un opérateur de radiotéléphonie mobile ;
iii- transmettre lesdites données d'opérateur dudit lecteur (12, 23) vers un réseau d'opérateur (14) ;
iv- transmettre dudit réseau d'opérateur (14) vers un gestionnaire d'abonnements (16) une requête de transfert desdites données liées audit abonnement audit réseau d'opérateur de radiotéléphonie mobile ;
v- transmettre dudit gestionnaire (16) audit élément de sécurité (10) lesdites données liées audit abonnement audit réseau d'opérateur de radiotéléphonie mobile.

2. Procédé selon la revendication 1, **caractérisé en ce que** l'étape -v- consiste à transmettre lesdites données liées audit abonnement audit réseau d'opérateur de radiotéléphonie mobile par l'intermédiaire dudit lecteur de carte (12, 23).

3. Procédé selon la revendication 1, **caractérisé en ce que** l'étape -v- consiste à transmettre lesdites données liées audit abonnement audit réseau d'opérateur de radiotéléphonie mobile par l'intermédiaire du réseau Internet (25) auquel est relié ledit lecteur de carte (23) par l'intermédiaire d'un ordinateur (22).

4. Procédé selon l'une des revendications 1 à 3, **caractérisé en ce que** l'étape -ii- est précédée d'une étape de vérification d'un code de sécurité.

5. Procédé selon l'une des revendications 1, 2 et 4, **caractérisé en ce que** l'étape -i-est mise en oeuvre par un installateur et **en ce qu'**il consiste à proposer audit installateur plusieurs abonnements différents, ledit installateur choisissant par l'intermédiaire de l'interface homme-machine dudit lecteur de carte (12) un des abonnements proposés.

6. Procédé selon l'une des revendications 1, 3 et 4, **caractérisé en ce qu'**il est mis en oeuvre par un revendeur de cartes ou un utilisateur final de ladite machine et **en ce que** ledit code de sécurité correspond à un code de transfert d'un opérateur de radiotéléphonie mobile.

7. Procédé selon l'une des revendications 1 à 6, **caractérisé en ce que** ledit élément de sécurité est un e-UICC.
